# FASCICULE DE BREVET EUROPEEN

(11) **EP 3 168 093 B1**
(45) Date de publication et mention de la délivrance du brevet: **15.05.2019**
(21) Numéro de dépôt: 16193428.6
(22) Date de dépôt: 12.10.2016
(51) Int. Cl.: B60S 1/40

(54) **ADAPTATEUR POUR UN ESSUIE-GLACE DE VÉHICULE AUTOMOBILE**
ADAPTER FÜR EIN KRAFTFAHRZEUGWISCHERBLATT
ADAPTER FOR A MOTOR VEHICLE WINDSCREEN WIPER

(30) Priorité: 13.11.2015 FR 1560910
(43) Date de publication de la demande: 17.05.2017
(73) Titulaire: Valeo Systèmes d'Essuyage, 78322 Le Mesnil Saint Denis (FR)
(72) Inventeur: MOULEYRE, Guillaume, 63122 Saint Genès Champanelle (FR); TERRASSE, William, 63270 VIC LE COMTE (FR)
(74) Mandataire: Vincent, Catherine Marie Marguerite

(56) Documents cités:
- EP-A1- 2 899 078
- WO-A1-2012/097490
- DE-A1-102010 030 880
- US-A1- 2012 060 316
- US-B1- 8 707 506

## Description

### DOMAINE TECHNIQUE

La présente invention concerne notamment un adaptateur pour un essuie-glace, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entraînement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade*" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général fixée directement sur la lame racleuse ou sur la *flat blade,* alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Chacun de ces organes (connecteur et adaptateur) comprend des moyens d'articulation configurés pour coopérer avec des moyens complémentaires de l'autre organe, pour définir au moins un axe transversal d'articulation des organes, qui est un axe d'articulation du balai vis-à-vis du bras. Dans la technique actuelle, l'un des organes, tels que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la pièce terminale du bras de façon à ce que ce corps s'étende au moins en partie entre deux parois latérales sensiblement parallèles de la pièce terminale. Le corps de l'adaptateur est relié à une extrémité à un carénage ou capotage, appelée couramment casquette, sur laquelle l'extrémité libre de la pièce terminale vient en butée. Enfin, le corps de l'adaptateur comprend en général un bouton d'actionnement qui est engagé par encliquetage élastique dans un orifice d'une paroi transversale de la pièce terminale, lorsque cette dernière est en butée sur la casquette, afin de verrouiller l'adaptateur vis-à-vis de la pièce terminale dans cette position.

Un adaptateur permet d'associer un balai à un type particulier de pièce terminale. Dans le cas des pièces terminales précitées à section en U, il en existe plusieurs variétés.

Il existe également des bras équipés de pièces terminales à verrouillage latéral. Une pièce terminale de ce type est solidaire d'une tige cylindrique destinée à définir ledit axe d'articulation, et destinée à être engagée à rotation dans un orifice de forme complémentaire du corps de l'adaptateur ainsi que dans un orifice du connecteur. La pièce terminale comporte en outre une patte ou un crochet en L qui chevauche l'adaptateur.

Dans la technique actuelle, il existe autant de variétés d'adaptateur que de variétés de pièces terminales, ce qui n'est pas pratique ni économique. Il existe donc un réel besoin d'un adaptateur universel apte à être monté sur au moins deux, voire plus, pièces terminales de bras d'essuie-glace, et en particulier sur des pièces terminales de types différents.

Il existe par exemple plusieurs types de bras à pièces terminales à verrouillage latéral. Ces bras peuvent par exemple se distinguer les uns des autres par la largeur des pièces terminales et en particulier par la largeur des pattes en L. Des pièces terminales comportent des pattes en L ayant une largeur relativement faible. Les tiges cylindriques de ces pattes sont en général épaulées et comprennent chacune un épaulement d'appui sur l'adaptateur.

L'art antérieur comprend aussi le document US 2012/0060316 A1. US-A-8707506 montre le préambule de la revendication 1.

L'invention propose une solution simple, efficace et économique à ce besoin.

### EXPOSE DE L'INVENTION

L'invention propose à cet effet un adaptateur pour un essuie-glace, en particulier de véhicule automobile, ledit adaptateur étant destiné à relier un balai d'essuie-glace à une première pièce terminale d'un premier bras d'entraînement, du type à verrouillage latéral et solidaire d'une tige cylindrique définissant un axe d'articulation de l'adaptateur vis-à-vis dudit balai, ainsi qu'à une seconde pièce terminale sensiblement en forme de U d'un second bras d'entraînement, ledit adaptateur comprenant un corps longitudinal comprenant des première et deuxième parois longitudinales latérales sensiblement parallèles et reliées l'une à l'autre par une paroi transversale, ledit corps comportant au moins un orifice transversal configuré pour recevoir ladite tige cylindrique, caractérisé en ce qu'il comprend en outre des moyens de blocage en rotation configurés pour coopérer avec ladite première pièce terminale afin de solidariser en rotation cette dernière et l'adaptateur autour dudit axe.

L'adaptateur selon l'invention peut être considéré comme un adaptateur universel.

L'adaptateur selon l'invention peut comprendre une ou plusieurs des caractéristiques suivantes, prises isolément ou en combinaison les unes avec les autres :
- lesdits moyens de blocage comprennent au moins un crochet de retenue configuré pour coopérer avec ladite première pièce terminale,
- ledit au moins un crochet de retenue est configuré pour coopérer par encliquetage élastique avec ladite première pièce terminale,
- ledit au moins un crochet de retenue est configuré pour maintenir ladite première pièce terminale sensiblement en appui sur une première surface de ladite paroi transversale,
- ladite paroi transversale comprend une seconde paroi d'appui configurée pour coopérer avec ladite seconde pièce terminale, lesdites première et seconde surfaces d'appui étant de préférence inclinées l'une par rapport à l'autre,
- ladite paroi transversale comporte un renfoncement configuré pour recevoir une partie de ladite première pièce terminale,
- ledit renfoncement comprend une paroi ou au moins un bord de fond qui est sensiblement parallèle audit axe et qui est configurée pour définir une première surface d'appui de ladite première pièce terminale,
- ladite première surface d'appui est inclinée par rapport à un axe d'allongement de l'adaptateur,
- ladite première surface d'appui est située à une extrémité longitudinale du corps reliée à un capotage,
- une première desdites parois longitudinales comporte une première nervure en saillie d'appui et de guidage traversée par ledit orifice et configurée pour coopérer avec un épaulement de ladite tige cylindrique, ladite première nervure s'étendant de préférence sur tout le pourtour dudit orifice,
- une deuxième desdites parois longitudinales comporte une deuxième nervure en saillie d'appui et de guidage configurée pour coopérer avec ladite première pièce terminale,
- chacune desdites première et deuxième parois comprend plusieurs nervures en saillie d'appui et de guidage,
- les nervures sur ladite première paroi sont symétriques aux nervures de la deuxième paroi par rapport à un plan longitudinal médian de l'adaptateur sensiblement perpendiculaire audit axe,
- ledit corps comprend des moyens élastiquement déformables d'encliquetage élastique,
- lesdits moyens comprennent au moins un bouton d'actionnement,
- lesdits moyens sont situés au niveau de ladite première surface d'appui et sont configurés pour être déplacés par déformation élastique par ladite première pièce terminale lorsqu'elle prend appui sur cette surface,
- lesdits moyens d'actionnement sont configurés pour être situés au voisinage d'une pièce dudit balai et comprend au moins un bord qui est destiné à être situé du côté de ladite pièce et qui est conformé pour s'étendre au moins en partie autour de ladite pièce lorsque lesdits moyens d'actionnement sont élastiquement déformés, et
- ledit au moins un bord a une forme incurvée concave.

La présente invention concerne encore un ensemble comportant un adaptateur tel que décrit précédemment et un bras d'entraînement, pour un essuie-glace, en particulier de véhicule automobile.

La présente invention concerne également un ensemble comportant un adaptateur tel que décrit ci-dessus et un balai d'essuie-glace, en particulier de véhicule automobile.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- les figures 1 et 2 sont des vues schématiques en perspective et à plus grande échelle d'un adaptateur selon un mode de réalisation ne montrant pas l'invention,
- les figures 3 à 6 sont des vues schématiques en perspective de l'adaptateur des figures 1 et 2 monté sur un balai d'essuie-glace, et coopérant avec une pièce terminale d'un bras d'entraînement dans le cas des figures 3, 4 et 6,
- les figures 7 et 8 sont des vues schématiques en perspective et à plus grande échelle d'un adaptateur selon un premier mode de réalisation de l'invention,
- les figures 9 à 12 sont des vues schématiques en perspective de l'adaptateur des figures 7 et 8 monté sur un balai d'essuie-glace, et coopérant avec une pièce terminale d'un bras d'entraînement dans le cas des figures 9 à 11,
- les figures 13 et 14 sont des vues schématiques en perspective et à plus grande échelle d'un adaptateur selon un deuxième mode de réalisation de l'invention,
- les figures 15 à 18 sont des vues schématiques en perspective de l'adaptateur des figures 13 et 14 monté sur un balai d'essuie-glace, et coopérant avec une pièce terminale d'un bras d'entraînement dans le cas des figures 15 et 15, l'adaptateur étant également vu en coupe longitudinale à la figure 18, et
- la figure 19 est une vue schématique en perspective d'un essuie-glace, cet essuie-glace comportant un balai d'essuie-glace, un bras d'entraînement du balai, et un système de connexion du balai au bras,

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

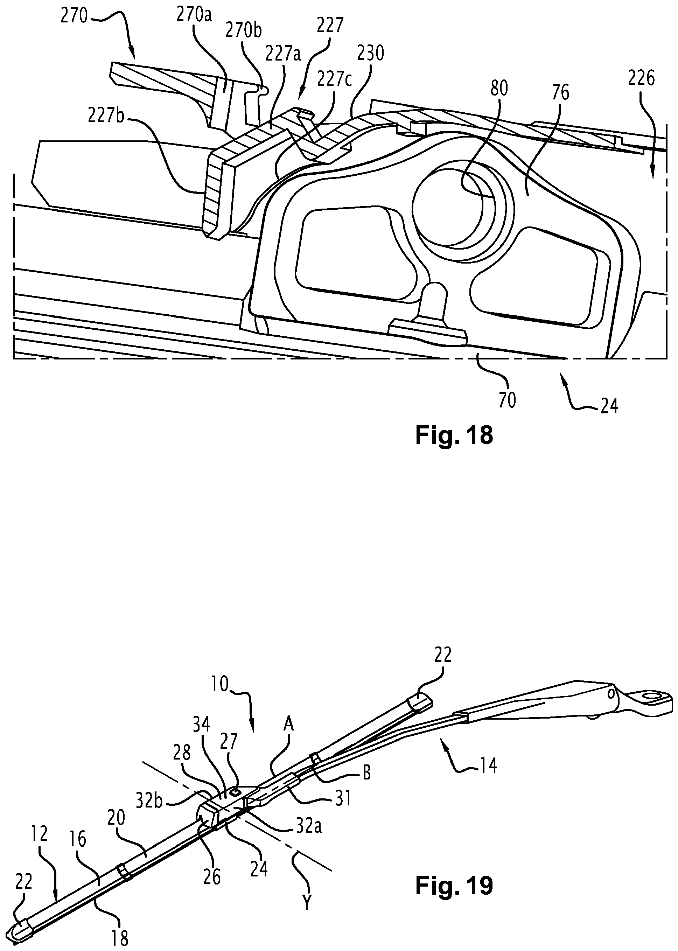

Il est illustré à la figure 19 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton d'actionnement, ici un bouton poussoir 27, porté par l'adaptateur.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou pièce terminale 28 du bras qui peut être formée d'une seule pièce avec le bras ou rapportée et fixée sur celui-ci.

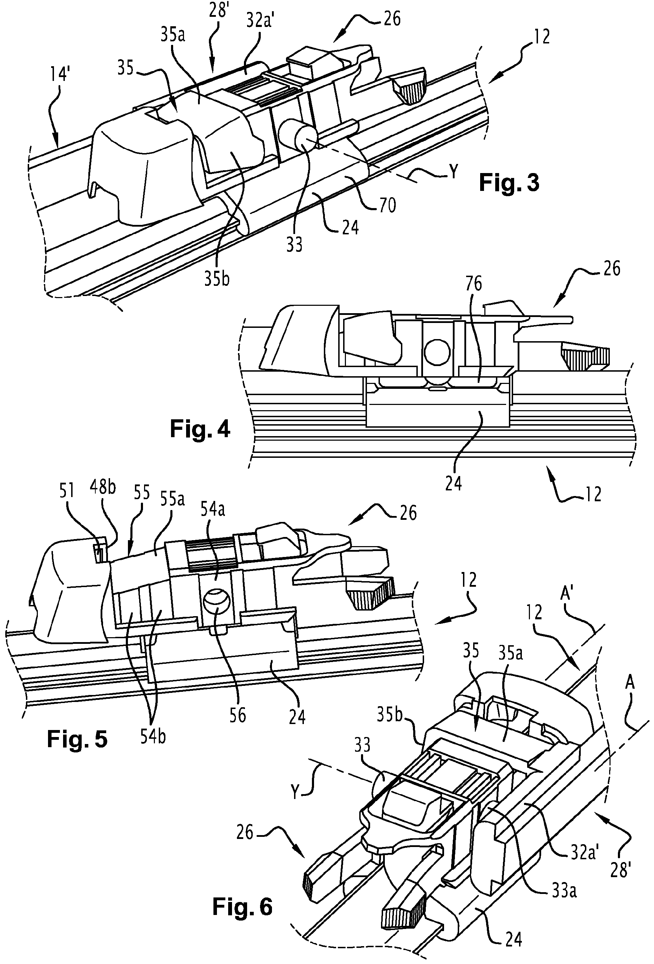

Dans l'exemple représenté, l'adaptateur 26 peut être relié à une pièce terminale 28 d'un premier bras 14 qui forme une chape à section transversale sensiblement en U, et à une pièce terminale 28' d'un second bras 14', du type à verrouillage vertical, visible notamment aux figures 3, 4 et 6.

En figure 19, la pièce terminale 28 a une forme allongée dont l'axe d'allongement A est en général sensiblement parallèle à l'axe d'allongement ou longitudinal du balai 12. La pièce terminale 28 comprend une partie de liaison au reste du bras 14, par exemple par sertissage. Cette partie a une forme générale allongée et s'étend le long d'un axe B sensiblement parallèle à l'axe A et à distance de cet axe. La partie est reliée à une extrémité arrière ou intérieure du reste de la pièce terminale 28.

La pièce terminale 28 comprend deux parois latérales 32a, 32b dont les bords longitudinaux supérieurs sont reliés entre eux par une paroi transversale supérieure 34. Les parois 32a, 32b et la paroi 34 délimitent entre elles un espace de logement de l'adaptateur 26. Les parois 32a, 32b comprennent au niveau de leurs bords longitudinaux inférieurs des moyens, tels que des crochets, de retenue de l'adaptateur 26 dans l'espace précité.

La paroi supérieure 34 comprend une ouverture traversante de forme complémentaire du bouton poussoir 27. En position de montage, le bouton poussoir 27 est logé dans cette ouverture et peut traverser cette dernière de façon à être en saillie sur la face supérieure de la paroi 34. Le montage du bouton poussoir 27 dans l'ouverture se fait par simple engagement ou emboîtement, de préférence par encliquetage élastique.

On définit L comme étant la largeur ou dimension latérale de la pièce terminale 28, cette largeur (externe) L étant mesurée entre les parois 32a, 32b et plus exactement entre les faces externes de celles-ci. La largeur interne L' est mesurée entre les faces internes des parois 32a, 32b. Toute largeur est mesurée dans une direction sensiblement perpendiculaire à l'axe A et parallèle à la paroi 34. Ces paramètres L et L', ainsi que d'autres paramètres utilisés dans le reste de la description, de sont pas forcément représentés dans les dessins.

La pièce terminale 28' des figures 3, 4 et 6 a une forme allongée dont l'axe d'allongement A est en général sensiblement parallèle à l'axe d'allongement ou longitudinal du balai 12.

La pièce terminale 28' comprend au moins une paroi latérale 32a' qui est solidaire d'une tige cylindrique 33 ayant une orientation transversale. La tige 33 définit ou s'étend le long de l'axe d'articulation Y.

La tige 33 comprend à son extrémité longitudinale reliée à la paroi 32a' un épaulement annulaire, ici cylindrique 33a.

La pièce terminale 28' comprend également une extension ou patte latérale 35 en forme de L. Cette patte 35 comprend une première portion 35a sensiblement parallèle à la tige 33 et s'étendant avec cette tige d'un même côté de la paroi 32a'. La patte 35 a une forme allongée dont une extrémité longitudinale est reliée à un bord longitudinal supérieur de la paroi 32a' et l'extrémité longitudinale opposée est reliée à une seconde portion 35b ou un rebord sensiblement perpendiculaire à la première portion.

Le rebord 35b s'étend sensiblement en regard de la paroi latérale 32a' et est situé à une distance transversale H de cette paroi. Cette distance H est mesurée entre les faces latérales en regard du rebord 35b et de la paroi 32a'. La distance H est mesurée le long de l'axe Y. La distance la plus proche entre le rebord 35b et la tige 33, mesurée dans le plan dudit rebord 35b, est notée B. H est, de préférence légèrement, supérieure à L.

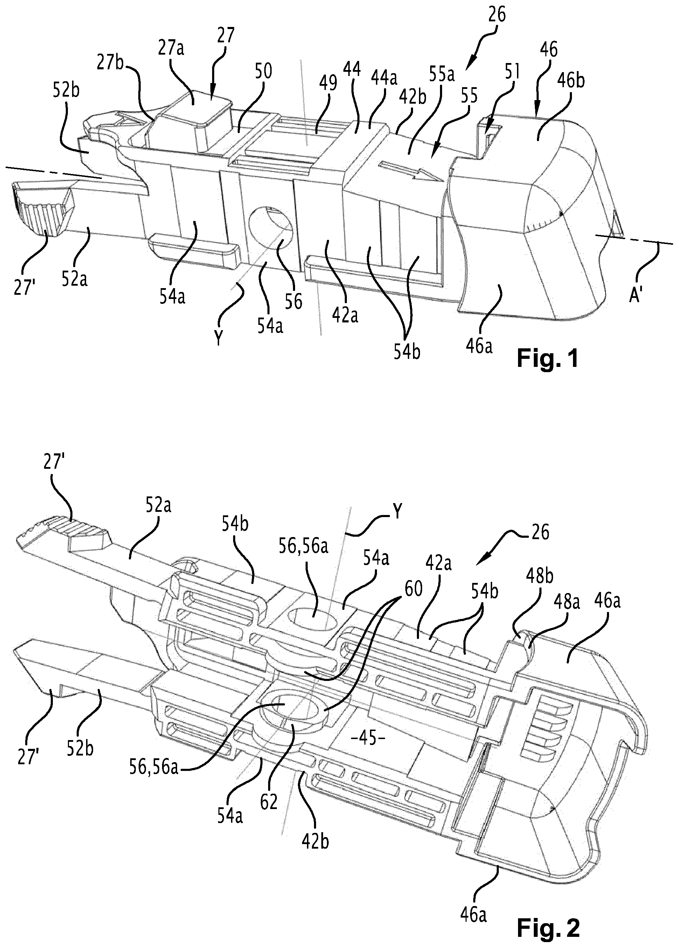

Selon un mode de réalisation ne montrant pas l'invention, représenté aux figures 1 à 6, l'adaptateur 26 est du type « universel » et est destiné à être monté indifféremment sur l'une ou l'autre des pièces terminales 28, 28'.

L'adaptateur 26 a une forme générale allongée le long de l'axe A'. Il comprend un corps comportant deux parois latérales 42a, 42b sensiblement parallèles entre elles et à l'axe A', et à distance l'une de l'autre. Ces parois 42a, 42b sont reliées entre elles à leurs extrémités supérieures par une paroi transversale supérieure 44 sensiblement perpendiculaire aux parois 42a, 42b. Les parois 42a, 42b, 44 ont ici une forme allongée en direction longitudinale.

Les parois 42a, 42b, 44 de l'adaptateur 26 définissent entre elles un espace longitudinal 45 dans lequel est destinée à être montée une partie du connecteur 24.

Les parois 42a, 42b sont ici du type à double peau et comportent chacune deux peaux, respectivement interne et externe, parallèles et à distance transversale l'une de l'autre. Les peaux sont reliées ensemble par des nervures rectilignes transversales.

Le corps de l'adaptateur 26 est relié à une première de ses extrémités longitudinales à un carénage ou capotage, aussi appelé casquette ou tête 46. Cette tête 46 a une dimension latérale supérieure à celle du corps de l'adaptateur et une hauteur également supérieure à celle du corps. Les parois latérales 42a, 42b du corps de l'adaptateur sont ainsi en retrait ou décalées par rapport à des faces latérales (externes) 46a de la tête, et sa paroi supérieure 44 est en retrait ou décalée par rapport à une face supérieure (externe) 46b de la tête.

Les faces latérales 46a de la tête 46 sont reliées aux parois latérales 42a, 42b du corps par des faces arrière latérales 48a, respectivement, qui s'étendent sensiblement perpendiculairement à l'axe A'. La face supérieure 46c de la casquette 46 est reliée à la paroi supérieure 44 du corps par une autre face arrière supérieure 48b qui s'étend également sensiblement perpendiculairement à l'axe A'.

Les faces arrière 48a, 48b de la tête 46 forment des faces d'appui de l'extrémité extérieure ou avant de la pièce terminale 28. Plus précisément, en position montée de l'adaptateur dans la pièce terminale 28, les bords libres avant des parois latérales de la pièce terminale sont destinés à venir en appui sur les faces 48a, et le bord libre avant de la paroi transversale de la pièce terminale est destiné à venir en appui sur la face 48b.

La paroi supérieure 44 du corps de l'adaptateur 26 comprend au moins une surface 44a sensiblement parallèle à l'axe A' cette surface est destinée à coopérer par appui et/ou glissement avec la paroi transversale supérieure 34 de la pièce terminale 28 de la figure 19.

La paroi supérieure 44 du corps de l'adaptateur 26 comprend, sensiblement en son milieu, une fenêtre 49 ou des évidements. La paroi supérieure 44 comprend à son extrémité longitudinale opposée à la tête 46 des fentes longitudinales parallèles entre elles et à l'axe A' et espacées les unes des autres, de façon à définir entre elles au moins une portion d'une languette longitudinale 50.

La languette 50 s'étend longitudinalement du côté opposé à la tête 46, dans le prolongement de la paroi supérieure 44. Elle est élastiquement déformable et est reliée à son extrémité libre extérieure ou avant au bouton poussoir supérieur 27 précité, qui est en saillie sur la languette 50. A l'état libre sans contrainte, chaque languette 50 est telle que le bouton poussoir 27 est situé au-dessus d'un plan passant par la paroi supérieure 44. Les déformations élastiques des languettes ont ici lieu dans un plan longitudinal médian sensiblement vertical, c'est-à-dire sensiblement perpendiculaire à la paroi supérieure 44. L'adaptateur 26 est ainsi équipé d'un bouton poussoir supérieur 27. Dans l'exemple représenté, il a une face avant 27a inclinée par rapport à l'axe A' (ici vers le bas d'arrière en avant) et une face arrière 27b inclinée par rapport à l'axe A' (ici vers le haut d'arrière en avant). Les faces 27a, 27b forment entre elles un angle supérieur à 180°.

Lors du montage de l'adaptateur 26 dans la pièce terminale 28, le bouton poussoir 27 est destiné à s'engager par encliquetage élastique dans l'ouverture de la pièce terminale pour verrouiller l'adaptateur vis-à-vis de la pièce terminale.

L'adaptateur 26 comprend en outre un orifice supérieur 51 d'engagement d'une patte d'une pièce terminale de bras. Cet orifice 51 est ici formé en partie dans la tête 46, à l'extrémité arrière de celle-ci, et en partie dans la paroi supérieure 44, à l'extrémité avant de celle-ci. L'orifice 51 a une forme générale carrée ou rectangulaire.

Les parois latérales 42a, 42b du corps se prolongent vers l'intérieur par des pattes longitudinales 52a, 52b élastiquement déformables. Chaque paroi 42a, 42b est reliée à une patte 52a, 52b, ces pattes 52a, 52b étant sensiblement parallèles et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête 46, portent chacune un bouton poussoir latéral 27' en saillie. Chaque patte 52a, 52b porte ainsi un bouton poussoir 27'. Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs 27' sont conformés pour coopérer avec des encoches de la pièce terminale 28 ou d'une autre pièce terminale non représentée.

Les parois latérales 42a, 42b comprennent chacune un orifice 56 traversant. Les orifices 56 des parois 42a, 42b sont sensiblement coaxiaux et définissent ici l'axe Y de pivotement de l'adaptateur 24 sur le connecteur 24, et donc du balai vis-à-vis du bras. Les orifices 56 sont ici à section circulaire et comprennent chacun une surface interne 56a sensiblement cylindrique. Les orifices 56 débouchent à leurs extrémités latérales externes sur les faces externes des parois 42a, 42b, respectivement, et à leurs extrémités latérales internes dans l'espace 45.

Les faces latérales internes en regard des parois latérales 42a, 42b comprennent des protubérances 60. Chaque paroi latérale 42a, 42b comprend une protubérance 60, les protubérances étant ici en regard l'une de l'autre et s'étendant sensiblement l'une vers l'autre. Les protubérances 60 sont symétriques par rapport à un plan longitudinal médian de l'adaptateur, perpendiculaire à la paroi supérieure 44. Chaque protubérance 60 présente également un plan de symétrie passant par l'axe Y et perpendiculaire à l'axe A'.

Chaque protubérance 60 est trouée et comprend un trou traversant. Ce trou est ici formé par un des orifices 56 précités. Chaque protubérance 60 est ainsi située sur la face interne de la paroi latérale 42a ou 42b de sorte à être traversée par l'orifice 56 de cette paroi.

Chaque protubérance 60 a une forme générale cylindrique et ici tubulaire du fait de l'orifice 56 qui la traverse. L'axe de chaque orifice 56, qui est confondu avec l'axe Y, est également confondu avec l'axe de la protubérance cylindrique 60 correspondante, si bien que l'orifice est centré vis-à-vis de la protubérance. Chaque protubérance 60 forme ainsi un bourrelet annulaire de matière autour de l'orifice 56, ayant sensiblement une épaisseur radiale par rapport à l'axe Y sensiblement constante. Chaque protubérance 60 a une dimension axiale le long de l'axe Y qui représente environ 10 à 20% de la dimension axiale ou largeur de l'espace 45 le long de l'axe Y. Chaque protubérance 60 a un diamètre externe qui représente environ 60 à 80% de la hauteur de la paroi latérale 42a, 42b correspondante, mesurée dans une direction sensiblement verticale et perpendiculaire à la paroi supérieure 44.

Chaque protubérance 60 comprend une partie, ici inférieure, tronquée ou chanfreinée. Chaque partie tronquée ou chanfreinée définit une rampe 62 qui s'étend dans un plan incliné par rapport aux parois latérales 42a, 42b. Chaque rampe 62 définit au moins une surface de glissement, et ici deux, destinées à coopérer avec le connecteur 24. Les rampes 62 des protubérances 60 sont inclinées de sorte qu'elles s'éloignent l'une de l'autre du haut vers le bas.

Dans l'exemple représenté, chaque rampe 62 a en section une forme sensiblement en V inversé. Comme évoqué dans ce qui précède, elle comprend deux surfaces de glissement adjacentes et inclinées l'une par rapport à l'autre. Les deux surfaces 62a, 62b sont ici inclinées l'une par rapport à l'autre d'un angle compris entre 190 et 330° et de préférence entre 200 et 240°.

La rampe 62 est formée par un chanfrein située sur une arête annulaire externe de la protubérance 60.

Les rampes 62 et leurs surfaces sont symétriques par rapport à un premier plan longitudinal médian perpendiculaire à la paroi supérieure 44, ainsi que par rapport à un second plan perpendiculaire au premier plan et à la paroi 44 et passant par l'axe Y.

Chaque protubérance 60 comprend en outre deux méplats externes diamétralement opposés.

L'adaptateur 26 est fixé au connecteur 24 grâce aux protubérances 60 qui forment des moyens de fixation de l'adaptateur au connecteur et qui peuvent en outre former des moyens de pivotement de l'adaptateur vis-à-vis du connecteur. Les moyens de fixation sont du type à encliquetage élastique, les protubérances 60 de l'adaptateur 26 étant destinées à coopérer par encliquetage élastique avec des moyens complémentaires du connecteur 24.

Le connecteur 24 est agencé pour être rendu solidaire, par exemple par sertissage, du balai 12. Le connecteur 24 assure une liaison mécanique dite complète avec le balai 12, en ce sens qu'il n'existe pas de degré de liberté. Le connecteur 24 peut également assurer une fonction de transport et de distribution d'un liquide de lavage du pare-brise du véhicule.

En référence aux figures 3, 4 et 18, le connecteur 24 peut comprendre une embase 70 qui s'étend longitudinalement et transversalement. Cette embase 70 comprend une zone de solidarisation sur le balai 12, et plus particulièrement sur au moins une vertèbre de ce balai. Cette zone de solidarisation prend par exemple la forme d'une saignée ménagée dans l'embase 70, cette saignée étant bordée par deux crochets aptes à venir en prise sur le balai.

L'embase 70 est surmontée d'un flanc 76, par exemple, issu de matière avec l'embase. Ce flanc 76 présente une dimension transversale inférieure à celle de l'embase et une dimension longitudinale sensiblement égale à celle de l'embase. Le flanc 76 est par exemple centré sur l'embase 70, selon l'axe Y. Le flanc 76 peut présenter une pluralité de nervures qui assurent un renforcement mécanique du flanc. Le flanc a une largeur ou dimension le long de l'axe Y, qui est inférieure à L'.

Le connecteur 24 et l'adaptateur 26 sont reliés mécaniquement par une liaison pivot. En ce qui concerne le connecteur 24, cette liaison pivot est mise en oeuvre par un orifice 80 réalisé dans le flanc 76. Cet orifice 80 s'étend selon l'axe Y. Il traverse le flanc 76. En d'autres termes, l'orifice 80 a un axe central centré sur l'axe Y.

Le connecteur 24 décrit ci-dessus est avantageusement unitaire, c'est-à-dire constitué par une même matière synthétique. Ce connecteur peut ainsi être fabriqué au cours d'une unique opération de moulage, notamment par injection.

L'adaptateur 26 est monté sur le connecteur 24 par encliquetage élastique de ses protubérances 60 dans l'orifice 80 du connecteur. Les rampes 62 des protubérances 60 de l'adaptateur 26 coopèrent avec le connecteur pour faciliter ce montage. De son côté, le connecteur peut comprendre également des moyens facilitant une insertion des protubérances 60 de l'adaptateur 26 dans sa cavité 10.

Les parois latérales 42a, 42b du corps de l'adaptateur 26 comprennent en outre sur leurs faces latérales externes des nervures 54a, 54b en saillie qui définissent des faces d'appui en direction transversale. Au moins certaines 54a de ces nervures en saillie sont situées au niveau des orifices 56, et sont traversées par ces orifices dans l'exemple représenté. Les nervures 54a ont ici une largeur ou dimension longitudinale le long de l'axe A', qui est supérieure au diamètre de l'orifice 56 qui la traverse. L'orifice 56 est sensiblement situé au milieu de cette nervure, dans la direction longitudinale, si bien que l'orifice 56 ne dépasse pas de la nervure 54a. Autrement dit, la nervure 54a s'étend sur tout le pourtour de l'orifice 56 correspondant.

Les nervures 54a traversées par les orifices 56 ont une largeur supérieure à celle des autres nervures 54b.

Les nervures 54a, 54b sont ici formées par des bandes de matière de faible épaisseur en direction transversale sur les faces latérales externes des parois latérales 42a, 42b. Les nervures ont une forme allongée et s'étendent longitudinalement entre les bords longitudinaux inférieurs et supérieurs des parois 42a, 42b.

Les nervures 54a, 54b définissent des faces d'appui sensiblement parallèles. Ces faces d'appui sont ici sensiblement parallèles aux faces latérales externes des parois 42a, 42b ainsi qu'à l'axe longitudinal de l'adaptateur 26. La dimension L est mesurée entre ces faces d'appui.

Les nervures 54a, 54b sont espacées en direction longitudinale les unes des autres et réparties sur les parois latérales 42a, 42b dans la même direction. Dans l'exemple représenté, chaque paroi latérale comprend quatre nervures 54a, 54b. Les nervures de l'une des parois latérales sont symétriques par rapport aux nervures de l'autre des parois latérales, par rapport à un plan longitudinal médian de l'adaptateur sensiblement perpendiculaire à sa paroi supérieure 44.

Le plan transversal médian perpendiculaire à la paroi supérieure 44 de l'adaptateur 26 et passant par l'axe Y traverse les nervures 54a sensiblement en leur milieu et est un plan de symétrie de ces nervures. Autrement dit, les nervures 54a sont sensiblement centrées sur l'axe Y et les orifices 56.

Les nervures 54a, 54b peuvent coopérer par glissement avec les faces internes des parois latérales 32a, 32b de la pièce terminale 28. Lorsque l'adaptateur 26 est engagé dans la pièce terminale 28, par translation axiale, de l'avant vers l'arrière, le long de l'axe A, les parois 32a, 32b de la pièce terminale 28 s'étendent de part et d'autre du corps de l'adaptateur et affleurent ses parois latérales 42a, 42b, voire sont en contact avec celles-ci. Les crochets de la pièce terminale s'insèrent sous le corps de l'adaptateur pour le maintenir dans la pièce terminale 28. Enfin, la pièce terminale 28 est en appui par ses bords avant sur les faces 48a, 48b du capotage 46, et le bouton poussoir 27 est engagé dans l'ouverture 38 de la pièce terminale. En position montée, les axes A et A' sont sensiblement confondus.

La nervure 54a d'une des parois 32a', 32b' de l'adaptateur 26' est destinée à coopérer par glissement avec l'épaulement de la tige 33a et au moins une des nervures 54b de l'autre paroi de l'adaptateur est destinée à coopérer par glissement avec le rebord 35b de la patte 35 de l'adaptateur. Dans l'exemple représenté, l'épaulement 33a coopère avers la nervure 54a de la paroi 42a et le rebord 35b coopère avec la nervure 54b la plus en avant de la paroi 42b.

Le bras 14' est monté sur l'adaptateur 26 de la façon suivante. La pièce terminale 28' est disposée sur le côté de l'adaptateur 26 et la tige cylindrique 33 est alignée sur les orifices 56 de l'adaptateur 26. La pièce terminale est déplacée vers l'adaptateur par translation le long de l'axe Y, la pièce terminale étant orientée autour de l'axe Y vis-à-vis de l'adaptateur de sorte que son rebord 35b passe au-dessus de la paroi supérieure 44 du corps. Ceci est autorisé par la distance B précitée. Cette translation est effectuée jusqu'à ce que l'épaulement 33a vienne en appui latéral sur la nervure 54a de la paroi 42a. Le bras 14' est ensuite déplacé en rotation autour de l'axe Y vis-à-vis de l'adaptateur 26, jusqu'à ce que le rebord 35b coopère par glissement avec la nervure avant 54b de la paroi 42b, comme cela est représenté aux figures 3, 4 et 6. En position montée, les axes A et A' sont parallèles et distants l'un de l'autre.

Le corps de l'adaptateur comprend sur sa paroi supérieure 44 un renfoncement 55 qui s'étend transversalement sensiblement entre les parois latérales 42a, 42b. Ce renfoncement 55 s'étend à proximité d'un plan transversal P perpendiculaire à l'axe longitudinal A' de l'adaptateur et passant sensiblement par les orifices 56.

Le renfoncement 55 est configuré pour recevoir une partie de la pièce terminale 28' et en particulier la première portion 35a de sa patte 35, comme cela est représenté dans les dessins.

Dans l'exemple représenté, la tige 33 de la pièce terminale 28' est située en avant de sa patte 35. Le renfoncement 55 de l'adaptateur est ici situé à l'avant de l'adaptateur, juste en arrière de sa tête 46.

On comprend dès lors, comme cela est représenté dans les dessins, que l'adaptateur devra être en position inverse (son extrémité avant orientée vers l'arrière du bras et son extrémité arrière orientée vers l'avant du bras), de façon à ce que, une fois la tige 33 du bras engagée dans les orifices 56 de l'adaptateur, la patte 35 du bras et en particulier sa première portion 35a puisse s'engager dans le renfoncement 55 de l'adaptateur.

Le renfoncement 55 comprend une paroi de fond, sensiblement parallèle à l'axe A', qui définit au moins une surface 55a d'appui de la portion 35a.

Le renfoncement 55 permet à la pièce terminale 28' et au bras d'adopter une position dans laquelle ils sont sensiblement parallèles à l'adaptateur 26. Ceci est particulièrement avantageux pour optimiser l'apiquage du balai sur une vitre de véhicule, et d'assurer ainsi que l'intégralité du balai est en appui et ce de manière homogène sur cette vitre.

La surface 55a du renfoncement est ici inclinée par rapport à la paroi 44 et donc l'axe A'. Dans l'exemple représenté, elle s'étend vers le bas de l'arrière vers l'avant de l'adaptateur. L'angle d'inclinaison est par exemple compris entre 10 et 40°.

La surface 55a est reliée à la face 48b ainsi qu'à l'orifice supérieur 51. Elle est reliée aux extrémités supérieures de deux nervures 54a avant adjacentes sur chacune des parois latérales 42a, 42b.

Avantageusement, l'adaptateur 26 pourrait comprendre des moyens de blocage en rotation destinés à coopérer, par exemple par encliquetage élastique, avec la pièce terminale 28, pour les solidariser en rotation. Les moyens de blocage pourraient être configurés pour maintenir la portion 35a de la pièce terminale dans le renfoncement et pourrait être situés sur une extrémité longitudinale de la surface 55a, sur la face 48b, sur la face 46b, etc.

L'adaptateur 26 décrit ci-dessus est avantageusement unitaire, c'est-à-dire constitué par une même matière synthétique. Il peut ainsi être fabriqué au cours d'une unique opération de moulage, notamment par injection.

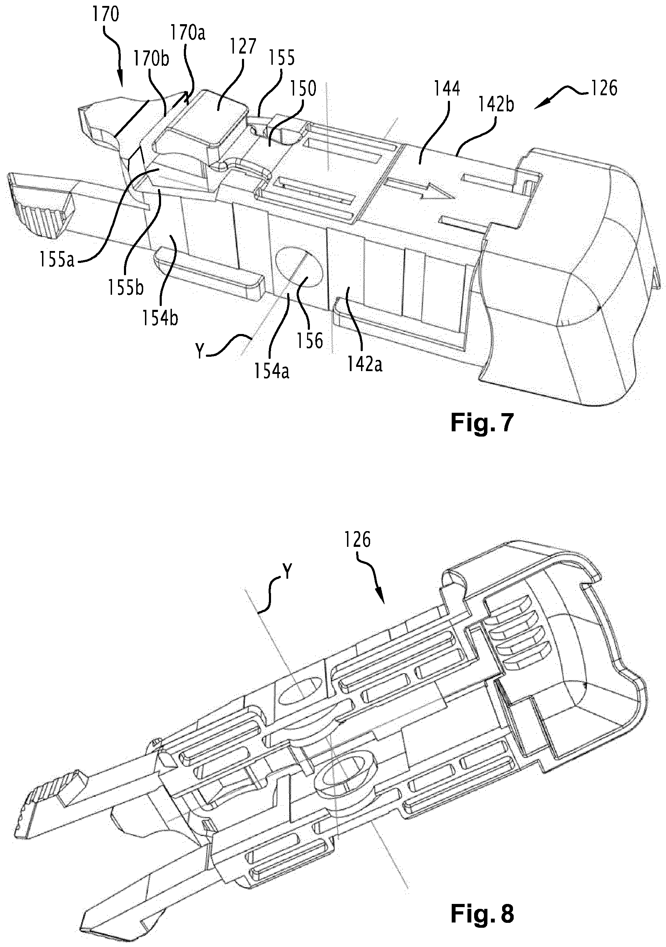

Les figures 7 à 12 représentent une variante de réalisation de l'invention dans lequel l'adaptateur 126 est du type « universel » et est destiné à être monté indifféremment sur une pièce terminale 28' à verrouillage latéral ou une pièce terminale 28 à section en U.

La description qui précède en relation avec l'adaptateur 26 et à son montage et ses interactions avec le balai et le bras, sont applicables à l'adaptateur 126 dans la mesure où elle ne contredit pas ce qui suit.

Contrairement à l'adaptateur 26, l'adaptateur 126 est destiné à être monté vis-à-vis de la pièce terminale 28' de sorte que son extrémité avant soit orientée vers l'avant de la pièce terminale. Ainsi, l'adaptateur 126 comprend un renfoncement 155 qui est, non pas prévu au voisinage de l'extrémité avant de l'adaptateur, mais au voisinage de son extrémité arrière.

Le renfoncement 155 est situé sur la paroi supérieure du corps de l'adaptateur et s'étend transversalement sensiblement entre les parois latérales 142a, 142b de ce corps. Ce renfoncement 155 s'étend à proximité et en arrière d'un plan transversal P perpendiculaire à l'axe longitudinal A' de l'adaptateur et passant sensiblement par les orifices 156.

Le renfoncement 155 est configuré pour recevoir une partie de la pièce terminale 28' et en particulier la première portion 35a de sa patte 35, comme décrit dans ce qui précède.

Dans l'exemple représenté, le renfoncement 155 est situé au niveau du bouton 127 et plus exactement sous ce dernier. Le renfoncement 155 comprend une lumière traversante 155a à travers laquelle le bouton peut être déplacé par déformation élastique de la languette.

Le renfoncement 155 est notamment délimité par deux bords longitudinaux supérieurs arrière des parois 142a, 142b, qui s'étendent de part et d'autre de la lumière 155a. Ces bords définissent des surfaces d'appui 155b. Ces surfaces 155b sont coplanaires, dont le plan est sensiblement parallèle à l'axe Y. Ce plan est incliné par rapport à la paroi supérieure 144 de l'adaptateur, vers le haut d'avant en arrière. L'angle d'inclinaison est par exemple compris entre 10 et 40°.

Les surfaces 155b sont reliées à l'extrémité supérieure de la nervure 154b la plus arrière de chaque paroi 142a, 142b de l'adaptateur.

Le renfoncement 155 est défini à l'avant par un bord arrière de la paroi supérieure 144 et à l'arrière par une face avant 170a d'un élément 170 d'accrochage.

Cet élément 170 est configuré pour coopérer par encliquetage élastique avec la patte 35 de la pièce terminale. L'élément 170 comprend un crochet 170b au niveau du bord supérieur de sa face avant 170a.

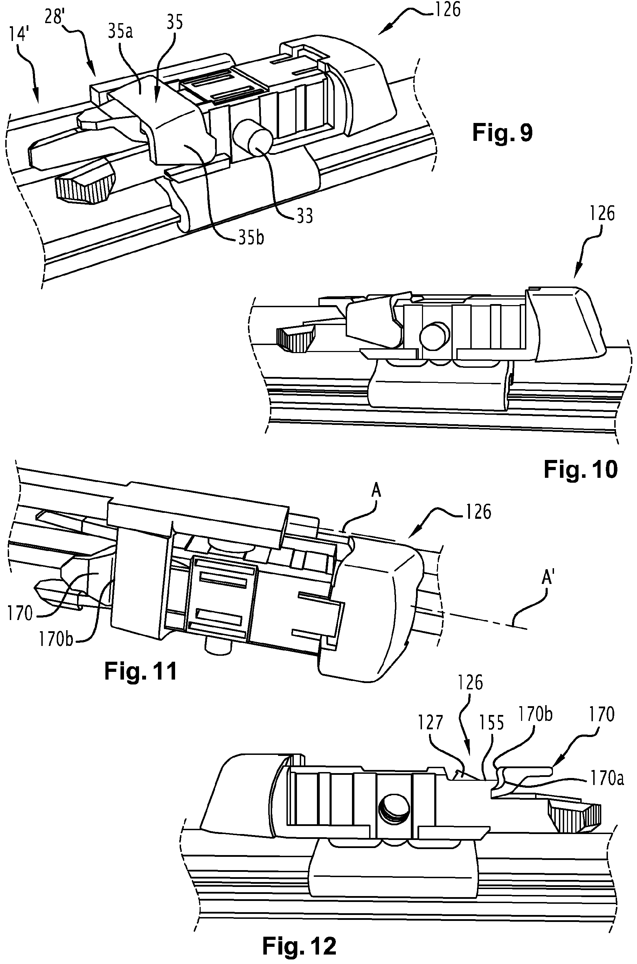

Ce crochet s'étend sensiblement sur toute la dimension transversale de l'élément et est destiné à coopérer avec le bord arrière de la seconde portion 35b de la patte, comme cela est représenté aux figures 9 à 11. L'accrochage de la pièce terminale 28' sur l'adaptateur permet de la solidariser en rotation autour de l'axe Y vis-à-vis de l'adaptateur, et donc de s'assurer que le pivotement de l'adaptateur vis-à-vis du connecteur se traduise par le pivotement du bras vis-à-vis du connecteur et donc du balai solidaire du connecteur. Le crochet 170b forme ainsi des moyens de blocage en rotation.

Le bras 14' est monté sur l'adaptateur 126 de la façon suivante. La pièce terminale 28' est disposée sur le côté de l'adaptateur 126 et la tige cylindrique 33 est alignée sur les orifices 156 de l'adaptateur 126. La pièce terminale est déplacée vers l'adaptateur par translation le long de l'axe Y, la pièce terminale étant orientée autour de l'axe Y vis-à-vis de l'adaptateur de sorte que son rebord 35b passe au-dessus de la paroi supérieure 144 du corps. Cette translation est effectuée jusqu'à ce que l'épaulement de la tige vienne en appui latéral sur la nervure 154a de la paroi 142b. Le bras 14' est ensuite déplacé en rotation autour de l'axe Y vis-à-vis de l'adaptateur 126, jusqu'à ce que le rebord 35b coopère par glissement avec la nervure arrière 154b de la paroi 142a, comme cela est représenté aux figures 9 à 11. Lors de ce déplacement, la patte 35 prend appui par sa portion 35a sur le bouton 127 et le force à se baisser et à passer à travers la lumière 155a. La languette 150 qui relie le bouton 127 à la paroi supérieure 144 est alors déformée élastiquement et le bouton 127 adopte la position telle que représentée à la figure 12. Ce déplacement est poursuivi jusqu'à l'engagement de la patte 35 dans le renfoncement 155 et son maintien dans cette position par coopération avec le crochet 170b de l'organe 170. Dans cette position montée, les axes A et A' sont parallèles et distants l'un de l'autre.

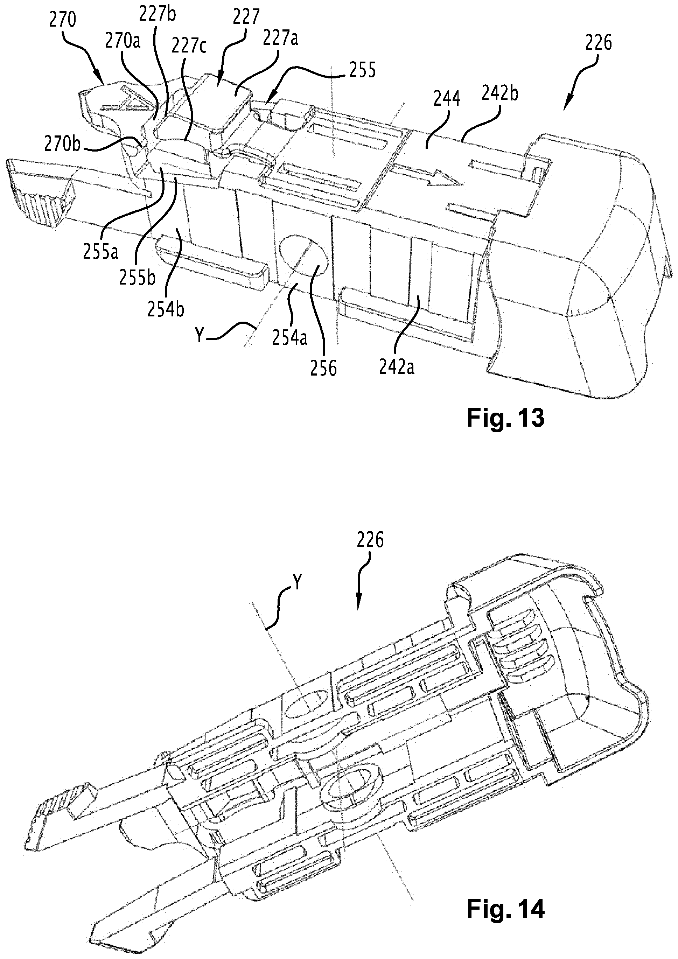

Les figures 13 à 18 représentent une autre variante de réalisation de l'invention dans lequel l'adaptateur 226 est du type « universel » et est destiné à être monté indifféremment sur une pièce terminale 28' à verrouillage latéral ou une pièce terminale 28 à section en U.

La description qui précède en relation avec l'adaptateur 26 et à son montage et ses interactions avec le balai et le bras, sont applicables à l'adaptateur 226 dans la mesure où elle ne contredit pas ce qui suit.

Contrairement à l'adaptateur 26, l'adaptateur 226 est destiné à être monté vis-à-vis de la pièce terminale 28' de sorte que son extrémité avant soit orientée vers l'avant de la pièce terminale. Ainsi, l'adaptateur 226 comprend un renfoncement 255 qui est, non pas prévu au voisinage de l'extrémité avant de l'adaptateur, mais au voisinage de son extrémité arrière.

Le renfoncement 255 est situé sur la paroi supérieure 244 du corps de l'adaptateur et s'étend transversalement sensiblement entre les parois latérales 242a, 242b de ce corps. Ce renfoncement 255 s'étend à proximité et en arrière d'un plan transversal P perpendiculaire à l'axe longitudinal A' de l'adaptateur et passant sensiblement par les orifices 256.

Le renfoncement 255 est configuré pour recevoir une partie de la pièce terminale 28' et en particulier la première portion 35a de sa patte 35, comme décrit dans ce qui précède.

Dans l'exemple représenté, le renfoncement 255 est situé au niveau du bouton 227 et plus exactement sous ce dernier. Le renfoncement 255 comprend une lumière traversante 255a à travers laquelle le bouton peut être déplacé par déformation élastique de la languette.

Le renfoncement 255 est notamment délimité par deux bords longitudinaux supérieurs arrière des parois 242a, 242b, qui s'étendent de part et d'autre de la lumière 255a. Ces bords définissent des surfaces d'appui 255b. Ces surfaces 255b sont coplanaires, dont le plan est sensiblement parallèle à l'axe Y. Ce plan est incliné par rapport à la paroi supérieure 244 de l'adaptateur, vers le haut d'avant en arrière. L'angle d'inclinaison est par exemple compris entre 10 et 40°.

Les surfaces 255b sont reliées à l'extrémité supérieure de la nervure 254b la plus arrière de chaque paroi 242a, 242b de l'adaptateur.

Le renfoncement 255 est défini à l'avant par un bord arrière de la paroi supérieure 244 et à l'arrière par une face avant 270a d'un élément 270 d'accrochage.

Cet élément 270 est configuré pour coopérer par encliquetage élastique avec la patte 35 de la pièce terminale. L'élément 170 comprend deux crochets latéraux 270b au niveau du bord supérieur de sa face avant 270a. Les crochets 270b sont à distance l'un de l'autre.

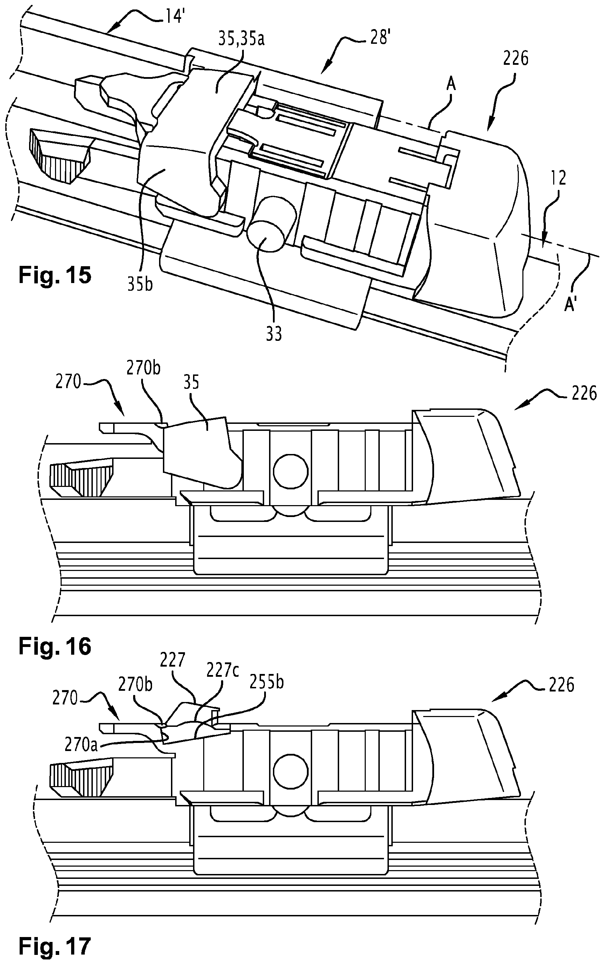

Ces crochets 270b sont destinés à coopérer avec le bord arrière de la seconde portion 35b de la patte, comme cela est représenté aux figures 15 et 16. L'accrochage de la pièce terminale 28' sur l'adaptateur permet de la solidariser en rotation autour de l'axe Y vis-à-vis de l'adaptateur, et donc de s'assurer que le pivotement de l'adaptateur vis-à-vis du connecteur se traduise par le pivotement du bras vis-à-vis du connecteur et donc du balai solidaire du connecteur. Les crochets 270b forment ainsi des moyens de blocage en rotation.

Le bras 14' est monté sur l'adaptateur 226 de la façon suivante. La pièce terminale 28' est disposée sur le côté de l'adaptateur 226 et la tige cylindrique 33 est alignée sur les orifices 256 de l'adaptateur 226. La pièce terminale est déplacée vers l'adaptateur par translation le long de l'axe Y, la pièce terminale étant orientée autour de l'axe Y vis-à-vis de l'adaptateur de sorte que son rebord 35b passe au-dessus de la paroi supérieure 244 du corps. Cette translation est effectuée jusqu'à ce que l'épaulement de la tige vienne en appui latéral sur la nervure 154a de la paroi 242b. Le bras 14' est ensuite déplacé en rotation autour de l'axe Y vis-à-vis de l'adaptateur 226, jusqu'à ce que le rebord 35b coopère par glissement avec la nervure arrière 254b de la paroi 242a. Lors de ce déplacement, la patte 35 prend appui par sa portion 35a sur le bouton 227 et le force à se baisser et à passer à travers la lumière 255a. La languette 250 qui relie le bouton 227 à la paroi supérieure 244 est alors déformée élastiquement et le bouton 227 adopte la position telle que représentée à la figure 12. Ce déplacement est poursuivi jusqu'à l'engagement de la patte 35 dans le renfoncement 255 et son maintien dans cette position par coopération avec le crochet 270b de l'organe 270. Dans cette position montée, les axes A et A' sont parallèles et distants l'un de l'autre.

La figure 18 montre la position du bouton 227 vis-à-vis du connecteur 24 lorsque le bouton est sollicité vers le bas par la pièce terminale 28' et que la languette 250 est fléchie. Dans cette position, le bouton 227 est proche du connecteur 24 et en particulier de son flanc 76.

Avantageusement, et comme représenté dans cette figure ainsi qu'à la figure 13, le bouton est conformé pour ne pas entrer en contact avec le connecteur dans cette position. Dans l'exemple représenté, le bouton 227 comprend au moins un bord 227c qui est destiné à être situé du côté du connecteur 24 et qui est conformé pour s'étendre au moins en partie autour de ce dernier dans la position précitée. Ce bord 227c a une forme incurvée concave.

Dans les figures 13 et 17, on constate que le bouton 227 comprend deux parois latérales sensiblement parallèles aux parois 242a, 242b. Ces parois sont reliées entre elles par une paroi transversale supérieure en forme de dièdre et présentant les faces avant 227a et arrière 227b inclinées précitées. Les extrémités inférieures de ces parois latérales forment les bords 227c. En position déformée représenté à la figure 18, les bords 227c ont une forme incurvée sensiblement autour de l'axe Y.

## Revendications

1. Adaptateur (26, 126, 226) pour un essuie-glace (10), en particulier de véhicule automobile, ledit adaptateur étant destiné à relier un balai (12) d'essuie-glace à une première pièce terminale (28') d'un premier bras d'entraînement (14'), du type à verrouillage latéral et solidaire d'une tige cylindrique (33) définissant un axe (Y) d'articulation de l'adaptateur vis-à-vis dudit balai, ainsi qu'à une seconde pièce terminale (28) sensiblement en forme de U d'un second bras d'entraînement (14), ledit adaptateur comprenant un corps longitudinal comprenant des première et deuxième parois longitudinales latérales (42a, 42b, 142a, 142b, 242a, 242b) sensiblement parallèles et reliées l'une à l'autre par une paroi transversale (44, 144, 244), ledit corps comportant au moins un orifice transversal (56, 156, 256) configuré pour recevoir ladite tige cylindrique, **caractérisé en ce qu'**il comprend en outre des moyens (170b, 270b) de blocage en rotation configurés pour coopérer avec ladite première pièce terminale afin de solidariser en rotation cette dernière et l'adaptateur autour dudit axe (Y).

2. Adaptateur (26, 126) selon la revendication précédente, dans lequel lesdits moyens de blocage comprennent au moins un crochet de retenue (170b, 270b) configuré pour coopérer avec ladite première pièce terminale (28').

3. Adaptateur (26, 126) selon la revendication précédente, dans lequel ledit au moins un crochet de retenue (170b, 270b) est configuré pour coopérer par encliquetage élastique avec ladite première pièce terminale (28').

4. Adaptateur (26, 126) selon la revendication 2 ou 3, dans lequel ledit au moins un crochet de retenue (170b, 270b) est configuré pour maintenir ladite première pièce terminale (28') sensiblement en appui sur une première surface (55a, 155b, 255b) de ladite paroi transversale (44, 144, 244).

5. Adaptateur (26, 126) selon la revendication précédente, dans lequel ladite paroi transversale (44, 144, 244) comprend une seconde paroi d'appui (44a, 144a, 244a) configurée pour coopérer avec ladite seconde pièce terminale (28), lesdites première et seconde surfaces d'appui étant de préférence inclinées l'une par rapport à l'autre.

6. Adaptateur (26, 126, 226) selon l'une des revendications précédentes, dans lequel ladite paroi transversale (44, 144, 244) comporte un renfoncement (55, 155, 255) configuré pour recevoir une partie de ladite première pièce terminale (28').

7. Adaptateur (26, 126, 226) selon la revendication précédente, dans lequel ledit renfoncement comprend une paroi ou au moins un bord de fond qui est sensiblement parallèle audit axe (Y) et qui est configurée pour définir une première surface d'appui (55a, 155b, 255b) de ladite première pièce terminale (28').

8. Adaptateur (26, 126) selon la revendication précédente, dans lequel ladite première surface d'appui (55a, 155b, 255b) est inclinée par rapport à un axe d'allongement (A') de l'adaptateur.

9. Adaptateur (26) selon la revendication 7 ou 8, dans lequel ladite première surface d'appui (55a, 155b, 255b) est située à une extrémité longitudinale du corps reliée à un capotage (46).

10. Adaptateur (126, 226) selon l'une des revendications précédentes, dans lequel une première desdites parois longitudinales (42a, 42b, 142a, 142b, 242a, 242b) comporte une première nervure en saillie d'appui et de guidage traversée par ledit orifice et configurée pour coopérer avec un épaulement de ladite tige cylindrique, ladite première nervure s'étendant de préférence sur tout le pourtour dudit orifice.

11. Adaptateur (26, 126, 226) selon la revendication précédente, dans lequel une deuxième desdites parois longitudinales (42a, 42b, 142a, 142b, 242a, 242b) comporte une deuxième nervure en saillie (54b, 154b, 254b) d'appui et de guidage configurée pour coopérer avec ladite première pièce terminale (28').

12. Adaptateur (26, 126, 226) selon la revendication 10 ou 11, dans lequel chacune desdites première et deuxième parois (42a, 42b, 142a, 142b, 242a, 242b) comprend plusieurs nervures en saillie d'appui et de guidage.

13. Adaptateur (26, 126, 226) selon la revendication précédente, dans lequel les nervures (51, 54b, 154a, 154b, 254, 254b) sur ladite première paroi (42a, 142a, 242a) sont symétriques aux nervures de la deuxième paroi (42b, 142b, 242b) par rapport à un plan longitudinal médian de l'adaptateur sensiblement perpendiculaire audit axe.

14. Adaptateur (26, 126, 226) selon l'une des revendications précédentes, dans lequel ledit corps comprend des moyens (27, 127, 227) élastiquement déformables d'encliquetage élastique.

15. Adaptateur (26, 126, 226) selon la revendication précédente, dans lequel lesdits moyens comprennent au moins un bouton d'actionnement (27, 127, 227).

16. Adaptateur (126, 226) selon la revendication 14 ou 15, dans lequel lesdits moyens (127, 227) sont situés au niveau de ladite première surface d'appui (55a, 155b, 255b) et sont configurés pour être déplacés par déformation élastique par ladite première pièce terminale (28') lorsqu'elle prend appui sur cette surface.

17. Adaptateur (126, 226) selon l'une des revendications 14 à 16, dans lequel lesdits moyens d'actionnement (127, 227) sont configurés pour être situés au voisinage d'une pièce (24) dudit balai (12) et comprend au moins un bord (227c) qui est destiné à être situé du côté de ladite pièce et qui est conformé pour s'étendre au moins en partie autour de ladite pièce lorsque lesdits moyens d'actionnement sont élastiquement déformés.

18. Adaptateur (126, 226) selon la revendication précédente, dans lequel ledit au moins un bord (227c) a une forme incurvée concave.

19. Ensemble comportant un adaptateur (26, 126) selon l'une des revendications précédentes et un bras d'entraînement (14, 14', 114, 114'), pour un essuie-glace, en particulier de véhicule automobile.

20. Ensemble comportant un adaptateur (26, 126) selon l'une des revendications 1 à 18 et un balai (12, 112) d'essuie-glace, en particulier de véhicule automobile.

## Patentansprüche

1. Adapter (26, 126, 226) für eine Wischerblatt (10), insbesondere eines Kraftfahrzeugs, wobei der Adapter dafür vorgesehen ist, ein Scheibenwischerblatt (12) mit einem ersten Endstück (28') eines ersten Antriebsarms (14), von der Bauart mit seitlicher Verriegelung und fest mit einer zylindrischen Stange (33) verbunden, welche eine Drehachse (Y) gegenüber dem Wischer definiert, sowie mit einem zweiten, im wesentlichen U-förmigen Endstück (28) eines zweiten Antriebsarms (14) zu verbinden, wobei der Adapter einen longitudinalen Körper aufweist, welcher erste und zweite longitudinale Seitenwände (42a, 42b, 142a, 142b, 242a, 242b) aufweist, welche im wesentlichen parallel und durch eine querverlaufende Wand (44, 144, 244) miteinander verbunden sind, wobei der Körper mindestens eine querverlaufende Öffnung (56, 156, 256) umfasst, welche dafür ausgelegt ist, die zylindrischen Stange aufzunehmen, **dadurch gekennzeichnet, dass** er ferner Mittel (170b, 270b) zur Blockierung der Drehung aufweist, welche dafür ausgelegt sind, um mit dem ersten Endstück zusammenzuwirken, um dieses Letztere und den Adapter in Drehung um die Achse (Y) herum zu verbinden.

2. Adapter (26, 126) nach dem vorhergehenden Anspruch, bei welchem die Blockierungsmittel mindestens einen Rückhaltehaken (170b, 270b) umfassen, welcher dafür ausgelegt ist, um mit dem ersten Endstück (28') zusammenzuwirken.

3. Adapter (26, 126) nach dem vorhergehenden Anspruch, bei welchem der mindestens eine Rückhaltehaken (170b, 270b) dafür ausgelegt ist, durch elastisches Verrasten mit dem ersten Endstück (28') zusammenzuwirken.

4. Adapter (26, 126) nach Anspruch 2 oder 3, bei welchem der mindestens eine Rückhaltehaken (170b, 270b) dafür ausgelegt ist, um das erste Endstück (28') im Wesentlichen in Auflage auf einer ersten Fläche (55a, 155b, 255b) der querverlaufenden Wand (44, 144, 244) zu halten.

5. Adapter (26, 126) nach dem vorhergehenden Anspruch, bei welchem die querverlaufende Wand (44, 144, 244) eine zweite Auflagewand (44a, 144a, 244a) umfasst, welche dafür ausgelegt ist, um mit dem zweiten Endteil (28) zusammenzuwirken, wobei die erste und zweite Auflagefläche vorzugsweise in Bezug zueinander geneigt sind.

6. Adapter (26, 126, 226) nach einem der vorhergehenden Ansprüche, bei welchem die querverlaufende Wand (44, 144, 244) eine Vertiefung (55, 155, 255) umfasst, welche dafür ausgelegt ist, um einen Abschnitt des ersten Endstücks (28') aufzunehmen.

7. Adapter (26, 126, 226) nach dem vorhergehenden Anspruch, bei welchem die Vertiefung eine Wand oder zumindest einen unteren Rand aufweist, welcher im Wesentlichen parallel zu der Achse (Y) verläuft und welcher dafür ausgelegt ist, um eine erste Auflagefläche (55a, 155b, 255b) des ersten Endstücks (28') zu definieren.

8. Adapter (26, 126) nach dem vorhergehenden Anspruch, bei welchem die erste Auflagefläche (55a, 155b, 255b) in Bezug zu einer Erstreckungsachse (A') des Adapters geneigt ist.

9. Adapter (26) nach Anspruch 7 oder 8, bei welchem die erste Auflagefläche (55a, 155b, 255b) an einem longitudinalen Ende des mit einer Abdeckung (46) verbunden Körpers angeordnet ist.

10. Adapter (126, 226) nach einem der vorhergehenden Ansprüche, bei welchem eine erste der longitudinalen Wände (42a, 42b, 142a, 142b, 242a, 242b) eine erste vorspringende Rippe zur Auflage und Führung umfasst, welche von der Öffnung durchquert wird und dafür ausgelegt ist, um mit einer Schulter der zylindrischen Stange zusammenzuwirken, wobei die erste Rippe sich vorzugsweise über den gesamten Umfang der Öffnung erstreckt.

11. Adapter (26, 126, 226) nach dem vorhergehenden Anspruch, bei welchem eine zweite der longitudinalen Wände (42a, 42b, 142a, 142b, 242a, 242b) eine zweite vorspringende Rippe (54b, 154b, 254b) zur Auflage und Führung umfasst, welche dafür ausgelegt ist, um mit dem ersten Endstück (28') zusammenzuwirken.

12. Adapter (26, 126, 226) nach Anspruch 10 oder 11, bei welchem jede der ersten und zweiten Wand (42a, 42b, 142a, 142b, 242a, 242b) mehrere vorspringende Rippen zur Auflage und Führung umfasst.

13. Adapter (26, 126, 226) nach dem vorhergehenden Anspruch, wobei die Rippen (51, 54b, 154a, 154b, 254, 254b) auf der ersten Wand (42a, 142a, 242a) symmetrisch zu den Rippen der zweiten Wand (42b, 142b, 242b) in Bezug auf eine longitudinale Mittelebene des Adapters sind, welche im wesentlichen senkrecht auf der Achse steht.

14. Adapter (26, 126, 226) nach einem der vorhergehenden Ansprüche, bei welchem der Körper elastisch verformbare Mittel (27, 127, 227) zum elastischen Verrasten umfasst.

15. Adapter (26, 126, 226) nach dem vorhergehenden Anspruch, wobei die Mittel mindestens einen Betätigungsknopf (27, 127, 227) aufweisen.

16. Adapter (126, 226) nach Anspruch 14 oder 15, wobei die Mittel (127, 227) im Bereich der ersten Auflagefläche (55a, 155b, 255b) angeordnet und dafür ausgelegt sind, um durch elastische Verformung durch das erste Endstück (28') verschoben zu werden, wenn es auf dieser Fläche aufliegt.

17. Adapter (126, 226) nach einem der Ansprüche 14 bis 16, bei welchem die Betätigungsmittel (127, 227) dafür ausgelegt sind, um benachbart zu einem Teil (24) des Wischers (12) angeordnet zu sein, und mindestens einen Rand (227c) aufweisen, welcher dafür vorgesehen ist, auf der Seite dieses Teils angeordnet zu sein, und welcher dafür angepasst ist, um sich zumindest zum Teil um das Teil herum zu erstrecken, wenn die Betätigungsmittel elastisch verformt werden.

18. Adapter (126, 226) nach dem vorhergehenden Anspruch, bei welchem mindestens ein Rand (227c) eine konkave, gekrümmte Form aufweist.

19. Anordnung, umfassend einen Adapter (26, 126) nach einem der vorhergehenden Ansprüche und einen Antriebsarm (14, 14', 114, 114') für ein Wischerblatt, insbesondere eines Kraftfahrzeugs.

20. Anordnung, umfassend einen Adapter (26, 126) nach einem der Ansprüche 1 bis 18 und einen Scheibenwischer (12, 112), insbesondere eines Kraftfahrzeugs.

## Claims

1. Adapter (26, 126, 226) for a windscreen wiper (10), particularly a motor vehicle windscreen wiper, the said adapter being intended to connect a wiper blade (12) to a first end piece (28') of a first driving arm (14') of the lateral locking type and secured to a cylindrical rod (33) defining an axis (Y) of articulation of the adapter with respect to the said blade, as well as a substantially U-shaped second end piece (28) of a second driving arm (14), the said adapter comprising a longitudinal body comprising first and second lateral longitudinal walls (42a, 42b, 142a, 142b, 242a, 242b) that are substantially parallel and connected together by a transverse wall (44, 144, 244), the said body comprising at least one through-orifice (56, 156, 256) configured to accommodate the said cylindrical rod, **characterized in that** it further comprises rotation blocking means (170b, 270b) configured to collaborate with the said first end piece in order to secure the latter and the adapter in terms of rotation about the said axis (Y).

2. Adapter (26, 126) according to the preceding claim, in which the said blocking means comprise at least one retaining hook (170b, 270b) configured to collaborate with the said first end piece (28').

3. Adapter (26, 126) according to the preceding claim, in which the said at least one retaining hook (170b, 270b) is configured to collaborate by elastic snap fastening with the said first end piece (28').

4. Adapter (26, 126) according to Claim 2 or 3, in which the said at least one retaining hook (170b, 270b) is configured to keep the said first end piece (28') substantially bearing against a first surface (55a, 155b, 255b) of the said transverse wall (44, 144, 244).

5. Adapter (26, 126) according to the preceding claim, in which the said transverse wall (44, 144, 244) comprises a second bearing wall (44a, 144a, 244a) configured to collaborate with the said second end piece (28), the said first and second bearing surfaces preferably being inclined with respect to one another.

6. Adapter (26, 126, 226) according to one of the preceding claims, in which the said transverse wall (44, 144, 244) comprises a depression (55, 155, 255) configured to accept part of the said first end piece (28').

7. Adapter (26, 126, 226) according to the preceding claim, in which the said depression comprises a wall or at least a bottom edge which is substantially parallel to the said axis (Y) and which is configured to define a first bearing surface (55a, 155b, 255b) of the said first end piece (28').

8. Adapter (26, 126) according to the preceding claim, in which the said first bearing surface (55a, 155b, 255b) is inclined with respect to an axis of elongation (A') of the adapter.

9. Adapter (26) according to Claim 7 or 8, in which the said first bearing surface (55a, 155b, 255b) is situated at a longitudinal end of the body which end is connected to a cowling (46).

10. Adapter (126, 226) according to one of the preceding claims, in which a first of the said longitudinal walls (42a, 42b, 142a, 142b, 242a, 242b) comprises a first projecting bearing and guidance rib through which the said orifice passes and which is configured to collaborate with a shoulder of the said cylindrical rod, the said first rib preferably extending all around the periphery of the said orifice.

11. Adapter (26, 126, 226) according to the preceding claim, in which a second of the said longitudinal walls (42a, 42b, 142a, 142b, 242a, 242b) comprises a second projecting bearing and guidance rib (54b, 154b, 254b) configured to collaborate with the said first end piece (28').

12. Adapter (26, 126, 226) according to Claim 10 or 11, in which each of the said first and second walls (42a, 42b, 142a, 142b, 242a, 242b) comprises several projecting bearing and guidance ribs.

13. Adapter (26, 126, 226) according to the preceding claim, in which the ribs (51, 54b, 154a, 154b, 254, 254b) on the said first wall (42a, 142a, 242a) are symmetrical with the ribs of the second wall (42b, 142b, 242b) about a median longitudinal plane of the adapter substantially perpendicular to the said axis.

14. Adapter (26, 126, 226) according to one of the preceding claims, in which the said body comprises elastically deformable means (27, 127, 227) for elastic snap-fitting.

15. Adapter (26, 126, 226) according to the preceding claim, in which the said means comprise at least one actuating button (27, 127, 227).

16. Adapter (126, 226) according to Claim 14 or 15, in which the said means (127, 227) are situated at the level of the said first bearing surface (55a, 155b, 255b) and are configured to be moved by elastic deformation by the said first end piece (28') when it bears against this surface.

17. Adapter (126, 226) according to one of Claims 14 to 16, in which the said actuating means (127, 227) are configured to be situated in the vicinity of a component (24) of the said blade (12) and comprises at least one edge (227c) which is intended to be situated on the side of the said component and which is configured to extend at least in part around the said component when the said actuating means are elastically deformed.

18. Adapter (126, 226) according to the preceding claim, in which the said at least one edge (227c) has a concave curved shape.

19. Assembly comprising an adapter (26, 126) according to one of the preceding claims and a driving arm (14, 14', 114, 114'), for a windscreen wiper, in particular a motor vehicle windscreen wiper.

20. Assembly comprising an adapter (26, 126) according to one of Claims 1 to 18 and a blade (12, 112) for a windscreen wiper, in particular a motor vehicle windscreen wiper.
